# EUROPEAN PATENT SPECIFICATION

(11) **EP 3 992 876 B1**
(45) Date of publication and mention of the grant of the patent: **18.06.2025**
(21) Application number: 21200183.8
(22) Date of filing: 30.09.2021
(51) Int. Cl.: G06Q 10/06

(54) **INTEGRATION NAVIGATOR AND INTELLIGENT MONITORING FOR LIVING SYSTEMS**
INTEGRATIONSNAVIGATOR UND INTELLIGENTE ÜBERWACHUNG FÜR LEBENDE SYSTEME
NAVIGATEUR D'INTÉGRATION ET SURVEILLANCE INTELLIGENTE POUR SYSTÈMES VIVANTS

(30) Priority: 01.10.2020 US 202063086195 P
(43) Date of publication of application: 04.05.2022
(73) Proprietor: Accenture Global Solutions Limited, Dublin 4 (IE)
(72) Inventor: ROY, Debashish, Covina, 91724 (US); MUKHERJEE, Sudeep, Cypress, 90630 (US); MCCARTHY, Benjamin, Everett, 98201 (US); SATIJA, Sachin, Charlotte, 28277 (US); SHAFFER, Brent, San Diego, 92103 (US); KING, Cory, Alberta, T3H 5M4 (CA)
(74) Representative: Black, Diego

(56) References cited:
- US-A1- 2019 132 191
- US-A1- 2019 362 291

## Description

### CROSS-REFERENCE TO RELATED APPLICATION

This application claims the benefit of U.S. Provisional Application No. 63/086,195, filed October 1, 2020.

### TECHNICAL FIELD

This disclosure generally relates to integrations in a system.

### BACKGROUND

Systems may include different applications and services that are integrated together. For example, a system may use integrations to bind together many kinds of applications to work in conjunction in various automated operations. However, integrations may experience failures. For example, an integration between two different applications may fail when a process that exchanges data between the applications fails.

US 2019/0362291 A1 discloses a computer-implemented method that includes generating, by a processor of a problem-tracking system, a problem ticket. The problem ticket describes a problem encountered by a first user, and the problem ticket is assigned to at least one qualified user to resolve. The method also includes receiving additional information relating to the problem from at least one second user. The method also includes storing the received additional information in association with the problem ticket. The receiving and the storing of the additional information occurs while the problem ticket is waiting to be resolved by the at least one qualified user. The method also includes providing the stored received additional information and the problem ticket to the at least one qualified user.

US 2019/0132191 A1 discloses a system and method for predictive ticketing in information technology (IT) systems. The method includes extracting a plurality of features from monitoring data related to an IT system, wherein the plurality of features includes at least one incident parameter, wherein the monitoring data includes machine-generated textual data; applying a machine learning model to the extracted plurality of features, wherein the machine learning model is configured to output a suitable insight for an incident represented by the at least one incident parameter, wherein the suitable insight is selected from among a plurality of historical insights; and generating a predictive ticket based on the suitable insight, wherein the predictive ticket includes a textual description of an expected future symptom in the IT system.

### SUMMARY

In general, an aspect of the subject matter described in this specification may involve a process for resolving contextual tickets. A contextual ticket may describe an issue that was experienced by a user of a system. For example, a contextual ticket may describe that a user was unable to send a meter location change to a meter data management system.

A system may provide a guided process for creation of a contextual ticket. For example, the system may guide a user to create a contextual ticket in response to the user being unable to send a meter location change to a meter data management system. The guided contextual ticket creation may enable users of the system to create highly relevant contextual tickets, where contextual data in the tickets help increase speed of issue resolution and provide a foundation for automation in resolving the issue.

The contextual data in the contextual tickets can include data that specifies one or more of integration systems, specific flows, application programming interface end points, real time integration status, message flow information, infrastructure status, impact score, possible root causes, possible solutions, and correlated past tickets.

The system may generate a ticket knowledge graph that represents the contextual data of the contextual ticket, and may provide the graph to a machine-learning trained action determination engine. The engine may output an indication of an action for resolving the issue indicated by the contextual ticket, and the system may then initiate the action indicated by the engine.

Particular embodiments of the subject matter described in this specification can be implemented so as to realize one or more of the following advantages. One advantage may be the issues may be more quickly resolved based on automatic determination and initiation of actions to resolve the issues. Another advantage may be that actions that resolve the issues may be more accurately determined by the machine-learning trained action determination engine than by a human operator. Yet another advantage is that non-standardized information may be standardized, and then used by a machine-learning trained model that requires standardized input.

In some aspects, the subject matter described in this specification may be embodied in methods that may include the actions of receiving a request from a user to generate a contextual ticket that indicates an issue with an integration for sending a meter location change to a meter data management system, obtaining baseline information for the issue, wherein the baseline information comprises a description provided by the user and a navigation point for the issue, generating, based on the baseline information, a ticket knowledge graph, comprising: generating extracted information based on the baseline information, wherein the extracted information comprises one or more of integration status, technical metadata and integration type; and generating the ticket knowledge graph based on the baseline information and the extracted information; providing the ticket knowledge graph to a machine-learning trained action determination engine, receiving, from the machine-learning trained action determination engine, an indication of an action for resolving the issue, and automatically providing, based on the indication of the action for resolving the issue, the action to a particular engine to resolve the issue.

Other implementations of this and other aspects include corresponding systems, apparatus, and computer programs, may be configured to perform the actions of the methods, encoded on computer storage devices. A system of one or more computers can be so configured by virtue of software, firmware, hardware, or a combination of them installed on the system that in operation cause the system to perform the actions. One or more computer programs can be so configured by virtue of having instructions that, when executed by data processing apparatus, cause the apparatus to perform the actions.

The foregoing and other embodiments can each optionally include one or more of the following features, alone or in combination. For instance, in some aspects generating, based on the baseline information, a ticket knowledge graph includes generating extracted information based on the baseline information, generating calculated information based on the baseline information and the extracted information, generating correlated information based on the calculated information, generating predicted information based on the correlated information, and generating a ticket knowledge graph based on the baseline information, extracted information, the calculated information, the correlated information, and the predicted information.

In certain aspects, generating a ticket knowledge graph based on the baseline information, the extracted information, the calculated information, the correlated information, and the predicted information includes generating the ticket knowledge graph to include nodes that represent the baseline information, the extracted information, the calculated information, the correlated information, and the predicted information. In some aspects, the ticket knowledge graph includes links that represent relationships between the nodes.

In some aspects, a root node of the ticket knowledge graph represents a navigational point of the issue. In certain aspects, generating extracted information based on the baseline information includes obtaining a common information model for integration and generating the extracted information from the common information model for integration based on the baseline information.

In certain aspects, providing the ticket knowledge graph to a machine-learning trained action determination engine includes providing the baseline information to a first action predictor engine, providing the extracted information to a second action predictor engine, providing the calculated information to a third action predictor engine, providing the correlated information to a fourth action predictor engine, providing the predicated information to a fifth action predictor engine, receiving respective actions from the first action predictor engine, the second action predictor engine, the third action predictor engine, the fourth action predictor engine, and the fifth action predictor engine, providing the respective actions to an action selection engine, and receiving a selected action from the action selection engine.

In some aspects, generating, based on the baseline information, a ticket knowledge graph includes generating a standardized data structure that represents at least a portion of the extracted information, a portion of the predicted information, and at least a portion of the calculated information and providing the standardized data structure to a machine-learning regression model, where the machine-learning regression model is trained based on standardized data structures and labeled outputs that represent values for at least a second portion of the predicted information.

The details of one or more implementations are set forth in the accompanying drawings and the description, below. Other potential features and advantages of the disclosure will be apparent from the description and drawings, and from the claims.

### BRIEF DESCRIPTION OF THE DRAWINGS

FIG. 1 illustrates a diagrams of an exemplary system for guided contextual ticket creation.
FIG. 2 illustrates a diagram of an exemplary model for guided contextual ticket creation.
FIG. 3 illustrates a diagram of example stages for resolving a contextual ticket.
FIG. 4 illustrates a diagram of an example ticket knowledge graph.
FIG. 5 illustrates a diagram of an exemplary action determination architecture for resolving a contextual ticket.
FIG. 6 illustrates a diagram of an example common information model for integration.
FIG. 7 illustrates a flowchart of an example process for resolving a contextual ticket.
FIG. 8 illustrates a schematic diagram of an exemplary generic computer system.

Like reference symbols in the various drawings indicate like elements.

### DETAILED DESCRIPTION

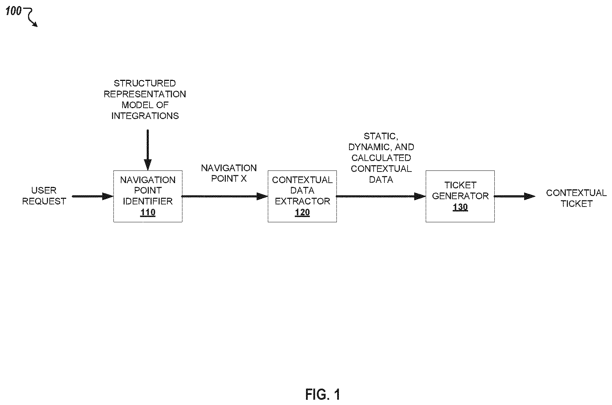

FIG. 1 illustrates a diagrams of an exemplary system 100 for guided contextual ticket creation. The system 100 includes a navigation point identifier 110 that identifies a navigation point, a contextual data extractor 120 that extracts contextual data based on the navigation point, and a ticket generator 130 that generates a contextual ticket based on the contextual data. The navigation point identifier 110, the contextual data extractor 120, and the ticket generator 120 may be implemented as one or more computer systems.

The navigation point identifier 110 may receive a request from a user to generate a ticket regarding a particular integration that has an issue, obtain a structured representation model of integrations in the system including the particular integration, and identify the navigation point that corresponds to the particular integration. For example, a user may navigate through a graphical representation of the model of integrations and request to submit a ticket for an integration for sending a meter location change to a meter data management system. A navigation point may be a specific user interface in an integration navigator. An integration navigator may be an application that provides a graphical user interface that users may use to view various integrations and create contextual tickets for issues.

In the example, the navigation point identifier 110 may receive the request, search through the model of integrations for a particular link that corresponds to the integration for sending a meter location change to a meter data management system, and then output text that specifies the particular link.

The contextual data extractor 120 extracts contextual data based on the navigation point that was identified by the navigation point identifier 110. For example, the contextual data extractor may extract specific flows, application programming interface end points, real time integration status, message flow information, infrastructure status, impact score, possible root causes, possible solutions, and correlated past tickets that correspond to the particular link that corresponds to the integration for sending a meter location change to a meter data management system.

The contextual data extractor 120 extracts contextual data based on (i) extracting static contextual data based on the navigation point, (ii) extracting dynamic contextual data based on the static contextual data, and (iii) determining calculated contextual data based on the dynamic contextual data. For example, the contextual data extractor 120 may (i) extract static contextual data that includes specific flows, application programming interface end points, (ii) from the specific flows, application programming interface end points then extract dynamic contextual data that includes real time integration status, message flow information, infrastructure status, and (iii) from the real time integration status, message flow information, infrastructure status then calculate contextual data that includes impact score, possible root causes, possible solutions, and correlated past tickets that correspond to the particular link that corresponds to the integration for sending a meter location change to a meter data management system.

The ticket generator 130 generates a contextual ticket based on the contextual data. For example, the ticket generator 130 may receive specific flows, application programming interface end points, real time integration status, message flow information, infrastructure status, impact score, possible root causes, possible solutions, and correlated past tickets that correspond to the particular link that corresponds to the integration for sending a meter location change to a meter data management system, and, in response, generate a contextual ticket that includes a link that corresponds to the integration for sending a meter location change to a meter data management system, a user description of the issue, technical metadata, recent tickets, relevant documentation link, integration status, contact information, and probably root cause.

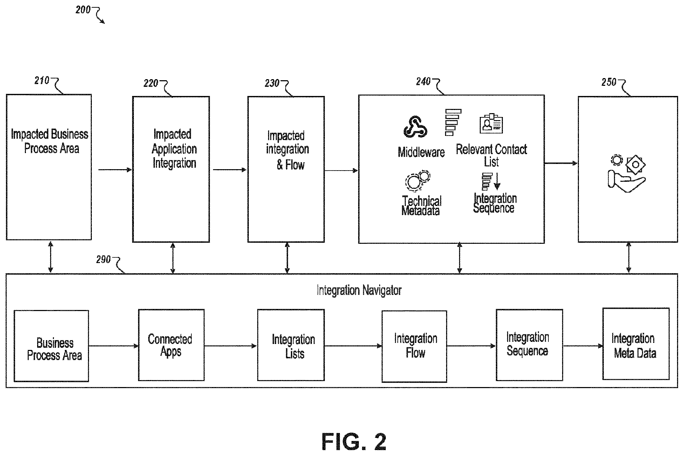

FIG. 2 illustrates a diagram of another exemplary model 200 for guided contextual ticket creation. The model 200 includes a business process area 210 impacted by an issue, an application 220 impacted by the issue, an integration 230 impacted by the issue, technical information 240, a ticketing tool 250, and an integration navigator 290.

The business process area 210 may be a collection of related, structured activities, people, and/or equipment in which a specific sequence produces a service or product for a particular customer or customers. For example, a utility customer information system may include six high level business process areas of federal insurance contributions act, billing, device, sales service, marketing, and digital.

The application 220 may be computer software that supports a process. For example, the application 220 may be a service order system, a meter reading system, etc. The integration 230 may be a data exchange with an application. For example, applications and a core system may have fifteen output and ten inbound integrations between each other.

Technical information 240 may be information associated with a specific integration. For example, technical information may be a Uniform Resource Locator (URL), security information, logging index, server, etc. A ticketing tool 250 may be a tool that resolves tickets. For example, the ticketing tool 250 may be software that automatically determines an action to resolve an issue and then initiates the action.

The integration navigator 290 may enable users to start by displaying business process areas and receiving a user selection of one, after selection of a business area then displaying connected applications and receiving a user selection of one, after selection of a connected application then displaying integration lists and receiving a user selection of one, after selection of an integration list then displaying a corresponding integration flow, integration sequence, and integration metadata.

An integration list for an application may refer to a list of integrations used by an application. An integration flow may be a visual depiction of end to end detailed message flow of an integration. An integration sequence may be detailed sequential steps of a specific integration flow. Integration metadata may be technical data associated with a specific integration flow.

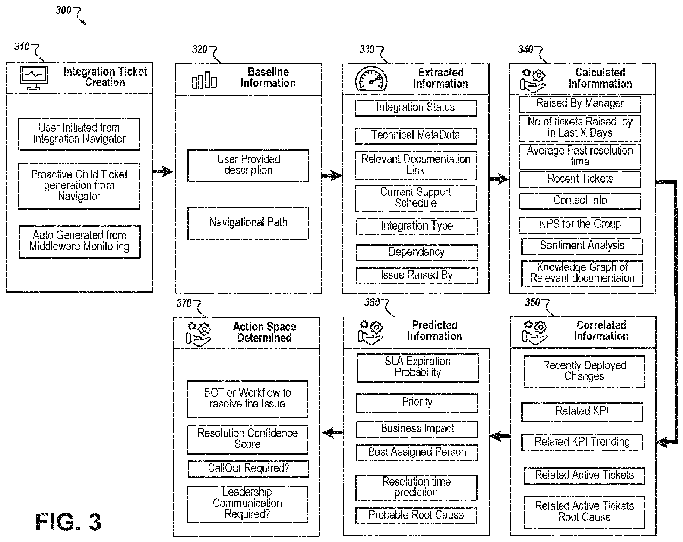

FIG. 3 illustrates a diagram of example stages 300 for resolving a contextual ticket. The stages 300 may include integration ticket creation 310, obtain baseline information 320, generate extracted information 330, generate calculated information 340, generate correlated information 350, generate predicted information 360, and action space determination 370.

The integration ticket creation 310 may be user initiated from a graphical user interface of an integration navigator, proactively generated by the integration navigator without an explicit request to generate by the user, or automatically generated from middleware monitoring.

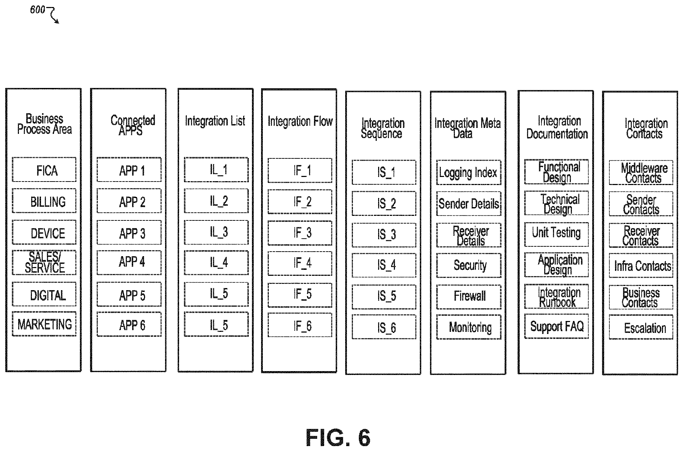

The baseline information 320 may be foundational information provided by the user and integration navigator when a user tries to create a ticket for any suspected issue. The baseline information may indicate a qualitative description of the issue as provided by the user, and a navigational path from the integration navigator system which helps in understanding the exact integration, connected application, and flow impacted based on a common information model for integration (CCIMI) model. The CCIMI model is described in more detail below in regards to FIG. 6. The navigational path may be the previously described navigation point.

The extracted information may be generated by getting relevant information from various middleware platforms, connected systems, and document repository systems directly related to the components for which the incident has been raised. The extracted information may represent the most direct relevant data related to the system, process and flows impacted. The system may generate the extracted information by making application programming interface (API) calls, database queries, log extraction, or any other data retrieval techniques. Some example of data elements extracted may be integration status, technical metadata of the integration, relevant documentation, support schedule, integration type, dependency, and issue raised by, etc.

The calculated information may be generated based on the user-provided information and extracted information, and may be the result of various calculation operations to gather additional secondary data relevant to the incident. The system may be able to add the calculated information based on intelligent calculation functions by getting a reference from the baseline and the extracted information. Some examples of a calculated information may be raised by manager, number of tickets raised by user in last predetermined number of days, average past resolution time for similar tickets raised by the user, recent tickets, contact information, net promotor score (NPS) for the group, user sentiment, and knowledge graph of relevant documentation, etc.

The correlated information may be generated based on gathering correlated information using the baselined, extracted, and calculated information. The correlated information may represent information that is not directly connected to the incident but may help understand the impact or root cause of the issues in a broader context. Correlated information may include recently deployed changes, related key performance indicators (KPI), related KPI trending, related active tickets, and related active tickets root cause, etc.

Predicted information may be added through sophisticated machine learning algorithms. These machine learning models may gather predicted information dependent on the data from the previous stages. Predicted information may include Service Level Agreement expiration probability, priority, business impact, best assigned person, resolution time prediction, and probable root cause, etc.

The action space that may be determined includes actions that may be determined to resolve the issue. For example, the action space may include executing a bot or workflow to resolve the issue, determining a resolution confidence score, determining whether a callout is required, and determining whether leadership communication is required.

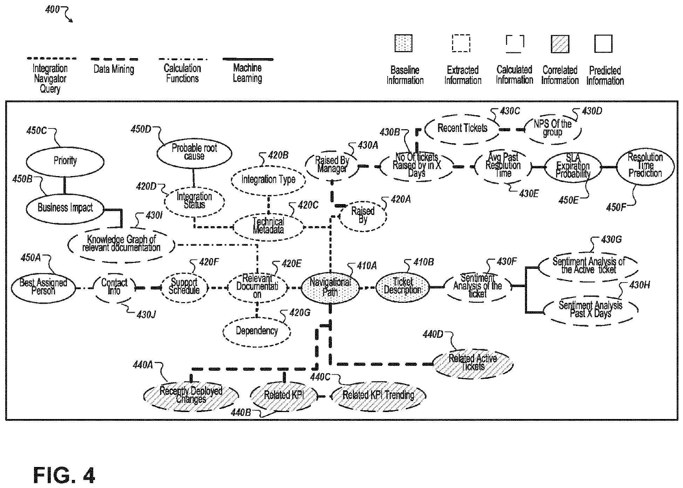

FIG. 4 illustrates a diagram of a ticket knowledge graph 400. The ticket knowledge graph 400 includes various nodes that represent data. The nodes may include baseline information nodes 410A-F, extracted information nodes 420A-G, calculated information nodes 430A-H, correlated information nodes 440A-D, and predicted information nodes 450A-F. The root node of the ticket knowledge graph 400 may be the baseline information node 410A that represents the navigational path.

Links between the nodes may represent relationships between the nodes. For example, node 410A may be linked to the node 420E that represents the relevant documentation by a link that indicates that the relevant documentation is determined from the navigational path with an integration navigator query, the node 420E may be linked to the node 420F that represents support schedule by another link that indicates that the support schedule is determined from the relevant documentation with an integration navigator query, and the node 420F may be linked to the node 430J that represents contact info by a link that indicates that the contact info is determined from the support schedule with data mining, and the node 430J may be linked to the node 450A that represents best assigned person by a link that indicates that the best assigned person is determined from the contact info with a calculation function.

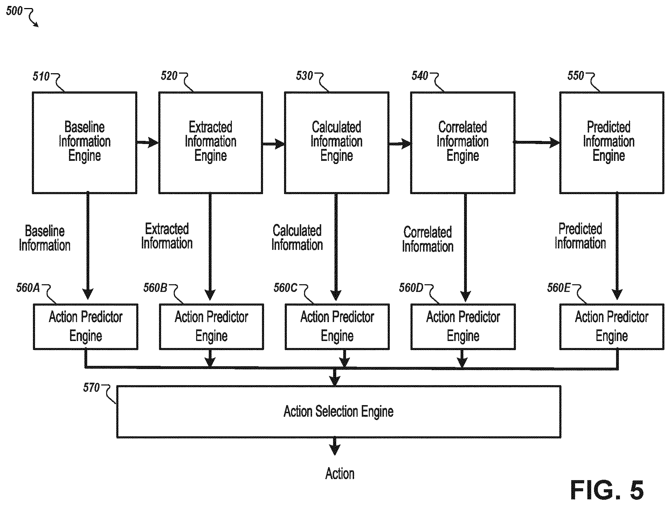

FIG. 5 illustrates a diagram of an exemplary action determination architecture for resolving a contextual ticket. The action determination architecture may provide a robust framework that utilizes the ticket knowledge graph. Actions that resolve the issue indicated by the contextual ticket may be predicted based on each type of information in the ticket knowledge graph, and an action determination engine may determine the final output by taking recommendations from each type into consideration.

For example, a baseline information engine 510 may obtain the baseline information and provide the baseline information to the action predictor engine 560A, which outputs a predicted action to the action selection engine 570. An extracted information engine 520 may generate the extracted information from the baseline information and provide the extracted information to the action predictor engine 560B, which outputs a predicted action to the action selection engine 570. A calculated information engine 530 may generate the calculated information from the extracted information and provide the calculated information to the action predictor engine 560C, which outputs a predicted action to the action selection engine 570. A correlated information engine 540 may generate the correlated information from the calculated information and provide the correlated information to the action predictor engine 560D, which outputs a predicted action to the action selection engine 570. A predicted information engine 550 may generate the predicted information from the correlated information and provide the predicted information to the action predictor engine 560E, which outputs a predicted action to the action selection engine 570. The action selection engine 570 may receive all the predicted actions from the action predictor engines 560A-E and output a final action.

The action predictor engines 560A-E may be machine-learning trained models that are trained to predict an action that will resolve an issue based on corresponding types of information in the tree knowledge graph 400. For example, the action predictor engine 560A may be trained to receive a tree knowledge graph that only includes baseline information and output an action that is predicted to resolve an issue with the baseline information, where the action predictor engine 560A is trained with training data that includes respective sets of baseline information and corresponding actions that resolve issues with the sets of baseline information. In another example, the action predictor engine 560B may be trained to receive a tree knowledge graph that includes both baseline information and extracted information, and output an action that is predicted to resolve an issue with both the baseline information and extracted information, where the action predictor engine 560B is trained with training data that includes respective sets of baseline information, extracted information, and corresponding actions that resolve issues with the sets of baseline information and extracted information.

The action selection engine 570 may be a machine-learning trained model that is trained to select an action that will resolve an issue based on a set of input actions. For example, the action selection engine 570 may be trained to receive a set of five actions, each from one of the action predictor engines 560A-E, and select one of the actions from the set. In some implementations, the action selection engine 570 may be trained to select a particular action based on training data that indicates sets of input actions labeled with corresponding actions to select. For example, the training data may indicate that a set of Action A, Action B, Action A, Action C, Action D is labeled with a selection of action C. In another example, the training data may indicate that a set of Action A, Action B, Action B, Action C, Action D is labeled with a selection of action D. In some implementations, the action predictor engines 560A-E may each output a confidence score for an action, and the action selection engine 570 may be trained with training data that indicates sets of actions, confidence scores for each action, and labels of corresponding actions to select for each set.

FIG. 6 illustrates a diagram of an example common information model for integration (CCMI). The CCMI may be a structured representation model of a distributed integration landscape and define relationships between each component in the model. For example, the CCMI may include representations of business process areas, connected applications, integrations, integration flows, integration sequences, integration metadata, integration documentation, and integration contacts.

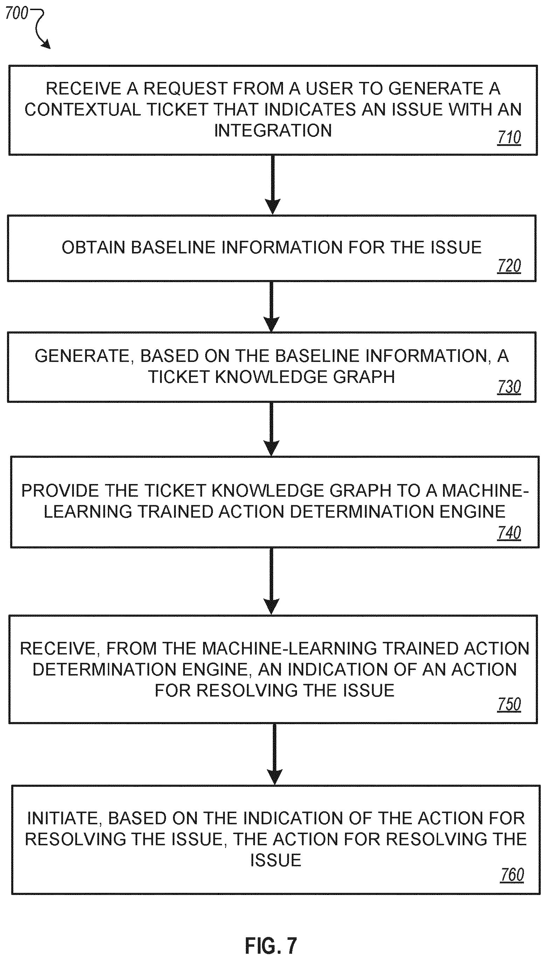

FIG. 7 illustrates a flowchart of an example process 700 for resolving a contextual ticket. The process 700 may be performed by the system 100 shown in FIG. 1 or another system. Briefly, and as will be described in more detail below, the process 700 includes receiving a request from a user to generate a contextual ticket that indicates an issue with an integration (710), obtaining baseline information for the issue (720), generating, based on the baseline information, a ticket knowledge graph (730), providing the ticket knowledge graph to a machine-learning trained action determination engine (740), receiving, from the machine-learning trained action determination engine, an indication of an action for resolving the issue (750), and initiating, based on the indication of the action for resolving the issue, the action for resolving the issue (760).

The process 700 includes receiving a request from a user to generate a contextual ticket that indicates an issue with an integration (710). For example, the navigation point identifier 110 may receive a request from a user to create a ticket for an issue while the user is viewing a particular integration in the integration navigator.

The process 700 includes obtaining baseline information for the issue (720). For example, the navigation point identifier 110 may obtain baseline information for the issue. In some implementations, obtaining baseline information for the issue may include obtaining a description provided by the user and identifying a navigation point for the issue. For example, the navigation point identifier 110 may extract the user entered description of "meter location change didn't change location" from the request and identify a navigation point in the integration navigator for the meter location change.

The process 700 includes generating, based on the baseline information, a ticket knowledge graph (730). For example, the contextual data extractor 120 may obtain the navigation point and description, and from both generate the ticket knowledge graph 400.

In some implementations, generating, based on the baseline information, a ticket knowledge graph includes generating extracted information based on the baseline information, generating calculated information based on the baseline information and the extracted information, generating correlated information based on the calculated information, generating predicted information based on the correlated information, and generating a ticket knowledge graph based on the baseline information, extracted information, the calculated information, the correlated information, and the predicted information. For example, the contextual data extractor 120 may perform the stages 330-360 shown in FIG. 3 to iteratively obtain the different types of information based on the previously obtained types of information, and then generate the ticket knowledge graph 400 from the different types of information.

In some implementations, generating a ticket knowledge graph based on the baseline information, the extracted information, the calculated information, the correlated information, and the predicted information includes generating the ticket knowledge graph to include nodes that represent the baseline information, the extracted information, the calculated information, the correlated information, and the predicted information. For example, the contextual data extractor 120 may generate the ticket knowledge graph 400 that includes baseline information nodes 410A-F, extracted information nodes 420A-G, calculated information nodes 430A-H, correlated information nodes 440A-D, and predicted information nodes 450A-F

In some implementations, generating, based on the baseline information, a ticket knowledge graph includes generating a standardized data structure that represents at least a portion of the extracted information, a portion of the predicted information, and at least a portion of the calculated information and providing the standardized data structure to a machine-learning regression model, where the machine-learning regression model is trained based on sets of standardized data structures and labeled outputs that represent values for at least a second portion of the predicted information. For example, the contextual data extractor 120 may provide information of raised by, integration status, support schedule, probable root cause, priority, best assigned person, average past resolution time, and sentiment analysis of the ticket to a data pre-processing engine that standardizes the information into a standardized data structure, and the standardized data structure may then be provided to a machine-learning regression model that outputs a SLA expiration probability of either low, medium, or high based on the standardized data structure. In some implementations, generating a standardized data structure may include determining a name of a role of a user that raised the ticket and generating the standardized data structure to include the name of the role of the user instead of a name of the user that raised the ticket.

The process 700 includes providing the ticket knowledge graph to a machine-learning trained action determination engine (740). For example, the ticket generator 130 may provide the contents of the ticket to the action predictor engines 560A-E, which then provide outputs to an action selection engine 570.

In some implementations, providing the ticket knowledge graph to a machine-learning trained action determination engine includes providing the baseline information to a first action predictor engine, providing the extracted information to a second action predictor engine, providing the calculated information to a third action predictor engine, providing the correlated information to a fourth action predictor engine, providing the predicated information to a fifth action predictor engine, receiving respective actions from the first action predictor engine, the second action predictor engine, the third action predictor engine, the fourth action predictor engine, and the fifth action predictor engine, providing the respective actions to an action selection engine, and receiving a selected action from the action selection engine.

For example, the baseline information may be provided to the action predictor engine 560A which outputs a first predicted action, the extracted information may be provided to the action predictor engine 560B which outputs a second predicted action, the calculated information may be provided to the action predictor engine 560C which outputs a third predicted action, the correlated information may be provided to the action predictor engine 560D which outputs a fourth predicted action, the predicted information may be provided to the action predictor engine 560E which outputs a fifth predicted action, and the action selection engine 570 may receive the five predicted actions and select to output a particular action to resolve the issue based on the five predicted actions. The process 700 includes receiving, from the machine-learning trained action determination engine, an indication of an action for resolving the issue (750). For example, the ticket generator 130 may receive an indication of an action performed by a particular workflow.

The process 700 includes initiating, based on the indication of the action for resolving the issue, the action for resolving the issue (760). For example, the ticket generator 130 may, in response to receiving the indication of the action and without user input after receiving the indication, automatically provide the contextual ticket to a particular engine that performs the particular workflow. In another example, the ticket generator 130 may, in response to receiving the indication of the action of notify leadership and without user input after receiving the indication, automatically generate and transmit a notification to leaders regarding the issue.

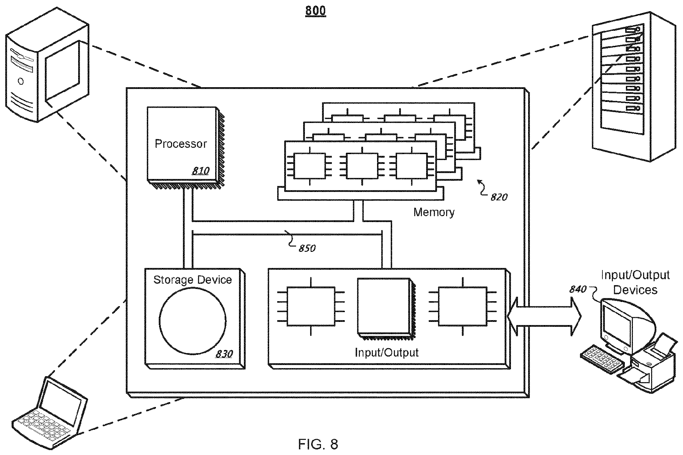

FIG. 8 illustrates a schematic diagram of an exemplary generic computer system 800. The system 100 may be implemented on the system 800.

The system 800 includes a processor 810, a memory 820, a storage device 830, and an input/output device 840. Each of the components 810, 820, 830, and 840 are interconnected using a system bus 850. The processor 810 is capable of processing instructions for execution within the system 800. In one implementation, the processor 810 is a single-threaded processor. In another implementation, the processor 810 is a multi-threaded processor. The processor 810 is capable of processing instructions stored in the memory 820 or on the storage device 830 to display graphical information for a user interface on the input/output device 840.

The memory 820 stores information within the system 800. In one implementation, the memory 820 is a computer-readable medium. In one implementation, the memory 820 is a volatile memory unit. In another implementation, the memory 820 is a non-volatile memory unit.

The storage device 830 is capable of providing mass storage for the system 800. In one implementation, the storage device 830 is a computer-readable medium. In various different implementations, the storage device 830 may be a floppy disk device, a hard disk device, a solid state drive, an optical disk device, a tape device, universal serial bus stick, or some other storage device.

The input/output device 840 provides input/output operations for the system 800. In one implementation, the input/output device 840 includes a keyboard and/or pointing device. In another implementation, the input/output device 840 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device, for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a rail trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, *e.g*., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other. The servers may be part of a cloud, which may include ephemeral aspects.

## Claims

1. A computer-implemented method comprising:
receiving a request from a user to generate a contextual ticket that indicates an issue with an integration for sending a meter location change to a meter data management system;
obtaining baseline information (320; 410) for the issue, wherein the baseline information comprises a description provided by the user and a navigation point for the issue;
generating, based on the baseline information, a ticket knowledge graph (400), the generating comprising:
generating extracted information (330) based on the baseline information, wherein the extracted information comprises one or more of integration status, technical metadata and integration type; and
generating the ticket knowledge graph based on the baseline information and the extracted information;
providing the ticket knowledge graph to a machine-learning trained action determination engine (500);
receiving, from the machine-learning trained action determination engine, an indication of an action for resolving the issue; and
automatically providing, based on the indication of the action for resolving the issue, the action to a particular engine to resolve the issue.

2. The method of claim 1, wherein generating, based on the baseline information, the ticket knowledge graph further comprises:
generating correlated information (350) based on the calculated information;
generating predicted information (360) based on the correlated information; and
generating the ticket knowledge graph based on the baseline information, extracted information, the calculated information, the correlated information, and the predicted information.

3. The method of claim 2, wherein generating the ticket knowledge graph based on the baseline information, the extracted information, the calculated information, the correlated information, and the predicted information comprises:
generating the ticket knowledge graph to include nodes (410; 420; 430; 440; 450) that represent the baseline information, the extracted information, the calculated information, the correlated information, and the predicted information.

4. The method of claim 3, wherein the ticket knowledge graph includes links that represent relationships between the nodes.

5. The method of claim 3 or 4, wherein a root node of the ticket knowledge graph represents a navigational path of the issue.

6. The method of any of claims 2 to 5, wherein generating extracted information based on the baseline information comprises:
Obtaining a common information model for integration (600); and
generating the extracted information from the common information model for integration based on the baseline information.

7. The method of any of claims 2 to 6, wherein providing the ticket knowledge graph to a machine-learning trained action determination engine comprises:
providing the baseline information to a first action predictor engine (560);
providing the extracted information to a second action predictor engine (560);
providing the calculated information to a third action predictor engine (560);
providing the correlated information to a fourth action predictor engine (560);
providing the predicated information to a fifth action predictor engine (560);
receiving respective actions from the first action predictor engine, the second action predictor engine, the third action predictor engine, the fourth action predictor engine, and the fifth action predictor engine;
providing the respective actions to an action selection engine (570); and
receiving a selected action from the action selection engine.

8. The method of any of the preceding claims, wherein generating, based on the baseline information, the ticket knowledge graph comprises:
generating a standardized data structure that represents at least a portion of the extracted information, a portion of the predicted information, and at least a portion of the calculated information; and
providing the standardized data structure to a machine-learning regression model, wherein the machine-learning regression model is trained based on prior standardized data structures and labeled outputs that represent values for at least a second portion of the predicted information.

9. A system comprising:
one or more computers (800) and one or more storage devices (830) storing instructions that are operable, when executed by the one or more computers, to cause the one or more computers to perform operations comprising:
receiving a request from a user to generate a contextual ticket that indicates an issue with an integration for sending a meter location change to a meter data management system;
obtaining baseline information (320; 410) for the issue, wherein the baseline information comprises a description provided by the user and a navigation point for the issue;
generating, based on the baseline information, a ticket knowledge graph (400), the generating comprising:
generating extracted information (330) based on the baseline information, wherein the extracted information comprises one or more of integration status, technical metadata and integration type; and
generating the ticket knowledge graph based on the baseline information and the extracted information;
providing the ticket knowledge graph to a machine-learning trained action determination engine (500);
receiving, from the machine-learning trained action determination engine, an indication of an action for resolving the issue; and
automatically providing, based on the indication of the action for resolving the issue, the action to a particular engine to resolve the issue.

10. The system of claim 9, wherein the instructions are operable, when executed by the one or more computers, to cause the one or more computers to perform operations as defined in one or more of claims 2 to 8.

## Patentansprüche

1. Computer-implementiertes Verfahren, umfassend:
Empfangen einer Anfrage von einem Benutzer, ein kontextbezogenes Ticket zu erzeugen, das ein Problem mit einer Integration zum Senden einer Zählerstandortänderung an ein Zählerdatenverwaltungssystem anzeigt;
Erhalten von Basisinformationen (320; 410) für das Problem, wobei die Basisinformationen eine von dem Benutzer bereitgestellte Beschreibung und einen Navigationspunkt für das Problem umfassen;
Erzeugen eines Ticket-Wissensgraphen (400) auf der Grundlage der Basisinformationen, wobei das Erzeugen umfasst:
Erzeugen von extrahierten Informationen (330) auf der Grundlage der Basisinformationen, wobei die extrahierten Informationen eine oder mehrere umfassen von: einem Integrationsstatus, technischen Metadaten und einem Integrationstyp; und
Erzeugen des Ticket-Wissensgraphen auf der Grundlage der Basisinformationen und der extrahierten Informationen;
Bereitstellen des Ticket-Wissensgraphen an eine mit maschinellem Lernen trainierte Aktionsbestimmungsmaschine (500);
Empfangen, von der durch maschinelles Lernen trainierten Aktionsbestimmungsmaschine, eines Hinweises auf eine Aktion zum Lösen des Problems; und
automatisches Bereitstellen, auf der Grundlage des Hinweises auf die Aktion zum Lösen des Problems, der Aktion an eine bestimmte Maschine, um das Problem zu lösen.

2. Verfahren nach Anspruch 1, wobei das Erzeugen des Ticket-Wissensgraphen auf der Grundlage der Basisinformationen weiter umfasst:
Erzeugen korrelierter Informationen (350) auf der Grundlage der berechneten Informationen;
Erzeugen von vorhergesagten Informationen (360) auf der Grundlage der korrelierten Informationen; und
Erzeugen des Ticket-Wissensgraphen auf der Grundlage der Basisinformationen, der extrahierten Informationen, der berechneten Informationen, der korrelierten Informationen und der vorhergesagten Informationen.

3. Verfahren nach Anspruch 2, wobei das Erzeugen des Ticket-Wissensgraphen auf der Grundlage der Basisinformationen, der extrahierten Informationen, der berechneten Informationen, der korrelierten Informationen und der vorhergesagten Informationen umfasst:
Erzeugen des Ticket-Wissensgraphen, um Knoten (410; 420; 430; 440; 450) einzuschließen, die die Basisinformationen, die extrahierten Informationen, die berechneten Informationen, die korrelierten Informationen und die vorhergesagten Informationen darstellen.

4. Verfahren nach Anspruch 3, wobei der Ticket-Wissensgraph Verbindungen einschließt, die Beziehungen zwischen den Knoten darstellen.

5. Verfahren nach Anspruch 3 oder 4, wobei ein Wurzelknoten des Ticket-Wissensgraphen einen Navigationspfad des Problems darstellt.

6. Verfahren nach einem der Ansprüche 2 bis 5, wobei das Erzeugen von extrahierten Informationen auf der Grundlage der Basisinformationen umfasst:
Erhalten eines gemeinsamen Informationsmodells zur Integration (600); und
Erzeugen der extrahierten Informationen aus dem gemeinsamen Informationsmodell für Integration auf der Grundlage der Basisinformationen.

7. Verfahren nach einem der Ansprüche 2 bis 6, wobei das Bereitstellen des Ticket-Wissensgraphen an eine mit maschinellem Lernen trainierte Aktionsbestimmungsmaschine umfasst:
Bereitstellen der Basisinformationen an eine erste Aktionsvorhersagemaschine (560);
Bereitstellen der extrahierten Informationen an eine zweite Aktionsvorhersagemaschine (560);
Bereitstellen der berechneten Informationen an eine dritte Aktionsvorhersagemaschine (560);
Bereitstellen der korrelierten Informationen an eine vierte Aktionsvorhersagemaschine (560);
Bereitstellen der vorhergesagten Informationen an eine fünfte Aktionsvorhersagemaschine (560);
Empfangen jeweiliger Aktionen von der ersten Aktionsvorhersagemaschine, der zweiten Aktionsvorhersagemaschine, der dritten Aktionsvorhersagemaschine, der vierten Aktionsvorhersagemaschine und der fünften Aktionsvorhersagemaschine;
Bereitstellen der jeweiligen Aktionen an eine Aktionsauswahlmaschine (570); und
Empfangen einer ausgewählten Aktion von der Aktionsauswahlmaschine.

8. Verfahren nach einem der vorstehenden Ansprüche, wobei das Erzeugen des Ticket-Wissensgraphen auf der Grundlage der Basisinformationen umfasst:
Erzeugen einer standardisierten Datenstruktur, die mindestens einen Teil der extrahierten Informationen, einen Teil der vorhergesagten Informationen und mindestens einen Teil der berechneten Informationen darstellt; und
Bereitstellen der standardisierten Datenstruktur an ein maschinenlernendes Regressionsmodell, wobei das maschinenlernende Regressionsmodell auf der Grundlage früherer standardisierter Datenstrukturen und etikettierter Ausgaben, die Werte für mindestens einen zweiten Teil der vorhergesagten Informationen darstellen, trainiert wird.

9. System, umfassend:
einen oder mehrere Computer (800) und eine oder mehrere Speichervorrichtungen (830), in denen Anweisungen gespeichert sind, die bei Ausführung durch den einen oder die mehreren Computer dazu führen, dass der eine oder die mehreren Computer Vorgänge ausführen, umfassend:
Empfangen einer Anfrage von einem Benutzer, ein kontextbezogenes Ticket zu erzeugen, das ein Problem mit einer Integration zum Senden einer Zählerstandortänderung an ein Zählerdatenverwaltungssystem anzeigt;
Erhalten von Basisinformationen (320; 410) für das Problem, wobei die Basisinformationen eine von dem Benutzer bereitgestellte Beschreibung und einen Navigationspunkt für das Problem umfassen;
Erzeugen eines Ticket-Wissensgraphen (400) auf der Grundlage der Basisinformationen, wobei das Erzeugen umfasst:
Erzeugen von extrahierten Informationen (330) auf der Grundlage der Basisinformationen,
wobei die extrahierten Informationen einen oder mehrere von einem Integrationsstatus, technischen Metadaten und einem Integrationstyp umfassen; und
Erzeugen des Ticket-Wissensgraphen auf der Grundlage der Basisinformationen und der extrahierten Informationen;
Bereitstellen des Ticket-Wissensgraphen an eine mit maschinellem Lernen trainierte Aktionsbestimmungsmaschine (500);
Empfangen, von der durch maschinelles Lernen trainierten Aktionsbestimmungsmaschine, eines Hinweises auf eine Aktion zum Lösen des Problems; und
automatisches Bereitstellen, auf der Grundlage des Hinweises auf die Aktion zum Lösen des Problems, der Aktion an eine bestimmte Maschine, um das Problem zu lösen.

10. System nach Anspruch 9, wobei die Anweisungen, wenn sie von dem einen oder den mehreren Computern ausgeführt werden, betriebsfähig sind, den einen oder die mehreren Computer zu veranlassen, die in einem oder mehreren der Ansprüche 2 bis 8 definierten Vorgänge durchzuführen.

## Revendications

1. Procédé mis en œuvre par ordinateur comprenant :
la réception d'une demande, en provenance d'un utilisateur, de générer un billet contextuel qui indique un problème avec une intégration pour envoyer un changement d'emplacement de compteur à un système de gestion de données de compteur ;
l'obtention d'informations de base (320 ; 410) pour le problème, dans lequel les informations de base comprennent une description fournie par l'utilisateur et un point de navigation pour le problème ;
la génération, sur la base des informations de base, d'un graphique de connaissance de billet (400), la génération comprenant :
la génération d'informations extraites (330) sur la base des informations de base, dans lequel les informations extraites comprennent un ou plusieurs parmi un état d'intégration, des métadonnées techniques et un type d'intégration ; et
la génération du graphique de connaissance de billet sur la base des informations de base et des informations extraites ;
la fourniture du graphique de connaissance de billet à un moteur (500) de détermination d'action formé par apprentissage automatique ;
la réception, en provenance du moteur de détermination d'action formé par apprentissage automatique, d'une indication d'une action pour résoudre le problème ; et
la fourniture automatique, sur la base de l'indication de l'action pour résoudre le problème, de l'action à un moteur particulier pour résoudre le problème.

2. Procédé selon la revendication 1, dans lequel la génération, sur la base des informations de base, du graphique de connaissance de billet comprend en outre :
la génération d'informations corrélées (350) sur la base des informations calculées ;
la génération d'informations prédites (360) sur la base des informations corrélées ; et
la génération du graphique de connaissance de billet sur la base des informations de base, des informations extraites, des informations calculées, des informations corrélées et des informations prédites.

3. Procédé selon la revendication 2, dans lequel la génération du graphique de connaissance de billet sur la base des informations de base, des informations extraites, des informations calculées, des informations corrélées et des informations prédites comprend :
la génération du graphique de connaissance de billet pour inclure des noeuds (410 ; 420 ; 430 ; 440 ; 450) qui représentent les informations de base, les informations extraites, les informations calculées, les informations corrélées et les informations prédites.

4. Procédé selon la revendication 3, dans lequel le graphique de connaissance de billet inclut des liens qui représentent des relations entre les noeuds.

5. Procédé selon la revendication 3 ou la revendication 4, dans lequel un noeud racine du graphique de connaissance de billet représente un chemin de navigation du problème.

6. Procédé selon l'une quelconque des revendications 2 à 5, dans lequel la génération d'informations extraites sur la base des informations de base comprend :
l'obtention d'un modèle d'informations commun pour intégration (600) ; et
la génération des informations extraites à partir du modèle d'informations commun pour intégration sur la base des informations de base.

7. Procédé selon l'une quelconque des revendications 2 à 6, dans lequel la fourniture du graphique de connaissance de billet à un moteur de détermination d'action formé par apprentissage automatique comprend :
la fourniture des informations de base à un premier moteur (560) de prédiction d'action ;
la fourniture des informations extraites à un deuxième moteur (560) de prédiction d'action ;
la fourniture des informations calculées à un troisième moteur (560) de prédiction d'action ;
la fourniture des informations corrélées à un quatrième moteur (560) de prédiction d'action ;
la fourniture des informations prédites à un cinquième moteur (560) de prédiction d'action ;
la réception d'actions respectives en provenance du premier moteur de prédiction d'action, du deuxième moteur de prédiction d'action, du troisième moteur de prédiction d'action, du quatrième moteur de prédiction d'action et du cinquième moteur de prédiction d'action ;
la fourniture des actions respectives à un moteur (570) de sélection d'action ; et
la réception d'une action sélectionnée en provenance du moteur de sélection d'action.

8. Procédé selon l'une quelconque des revendications précédentes, dans lequel la génération, sur la base des informations de base, du graphique de connaissance de billet comprend :
la génération d'une structure de données normalisée qui représente au moins une partie des informations extraites, une partie des informations prédites et au moins une partie des informations calculées ; et
la fourniture de la structure de données normalisée à un modèle de régression à apprentissage automatique, dans lequel le modèle de régression à apprentissage automatique est formé sur la base de structures de données normalisées antérieures et de sorties étiquetées qui représentent des valeurs pour au moins une deuxième partie des informations prédites.

9. Système comprenant :
un ou plusieurs ordinateurs (800) et un ou plusieurs dispositifs de stockage (830) stockant des instructions qui servent, lors de leur mise en œuvre par les un ou plusieurs ordinateurs, à amener les un ou plusieurs ordinateurs à mettre en œuvre des opérations comprenant :
la réception d'une demande, en provenance d'un utilisateur, de générer un billet contextuel qui indique un problème avec une intégration pour envoyer un changement d'emplacement de compteur à un système de gestion de données de compteur ;
l'obtention d'informations de base (320 ; 410) pour le problème, dans lequel les informations de base comprennent une description fournie par l'utilisateur et un point de navigation pour le problème ;
la génération, sur la base des informations de base, d'un graphique de connaissance de billet (400), la génération comprenant :
la génération d'informations extraites (330) sur la base des informations de base,
dans lequel les informations extraites comprennent un ou plusieurs parmi un état d'intégration, des métadonnées techniques et un type d'intégration ; et la génération du graphique de connaissance de billet sur la base des informations de base et des informations extraites ;
la fourniture du graphique de connaissance de billet à un moteur (500) de détermination d'action formé par apprentissage automatique ;
la réception, en provenance du moteur de détermination d'action formé par apprentissage automatique, d'une indication d'une action pour résoudre le problème ; et
la fourniture automatique, sur la base de l'indication de l'action pour résoudre le problème, de l'action à un moteur particulier pour résoudre le problème.

10. Système selon la revendication 9, dans lequel les instructions servant à, lors de leur mise en œuvre par les un ou plusieurs ordinateurs, à amener les un ou plusieurs ordinateurs à mettre en œuvre des opérations telles que définies dans une ou plusieurs des revendications 2 à 8.
